# EUROPÄISCHE PATENTANMELDUNG

(11) **EP 1 916 049 A1**
(43) Veröffentlichungstag der Anmeldung: **30.04.2008**
(21) Anmeldenummer: 07118233.1
(22) Anmeldetag: 10.10.2007
(51) Int. Cl.: B23K 9/32

(54) **Basiseinheit für eine Schweißzange zum Elektro-Punktschweißen sowie Schweißzange mit einer solchen Basiseinheit**

(30) Priorität: 24.10.2006 DE 202006016466 U
(71) Anmelder: Nimak GmbH, 57537 Wissen (DE)
(72) Erfinder: Nickel, Paul, 57537, Wissen (DE)
(74) Vertreter: Patentanwälte Dr. Solf & Zapf

(57) **Zusammenfassung**

Die vorliegende Erfindung betrifft eine Basiseinheit (2) für eine Schweißzange (1) zum Elektro-Punktschweißen, mit einem bestimmte Funktionskomponenten enthaltenden Gehäuse (8). Die Funktionskomponenten sind mit äußeren elektrischen, pneumatischen und/oder hydraulischen Versorgungsleitungen verbunden bzw. verbindbar. Eine zugentlastende Leitungsdurchführung (42) ist für die Versorgungsleitungen vorgesehen. Die Leitungsdurchführung (42) ist Bestandteil eines deckelartigen, eine Öffnung des Gehäuses (8) verschließenden Wandungselementes (26). Die Funktionskomponenten sind mittelbar über eine Mehrfach-Steckkupplungseinrichtung (24) mit äußeren elektrischen, pneumatischen und/oder hydraulischen Versorgungsleitungen verbunden oder verbindbar. Steckverbinderteile (34 bis 40) der Steckkupplungseinrichtung (24) sind an einem deckelartigen, eine Öffnung des Gehäuses (8) verschließenden Wandungselement (26) gehaltert. Ferner umfasst die Erfindung eine Schweißzange mit einer erfindungsgemäßen Basiseinheit sowie ein Wandungselement für eine erfindungsgemäße Basiseinheit (2) bzw. für eine erfindungsgemäße Schweißzange (1).

## Beschreibung

Die vorliegende Erfindung betrifft gemäß dem Oberbegriff des Anspruchs 1 zunächst eine Basiseinheit für eine Schweißzange zum Elektro-Punktschweißen, mit einem bestimmte Funktionskomponenten enthaltenden Gehäuse, wobei die Funktionskomponenten mit äußeren elektrischen, pneumatischen und/oder hydraulischen Versorgungsleitungen verbunden bzw. verbindbar sind, und wobei eine zugentlastende Leitungsdurchführung für die Versorgungsleitungen vorgesehen ist.

Ferner betrifft die Erfindung eine Basiseinheit gemäß dem Oberbegriff des Anspruchs 2, wobei die Funktionskomponenten mittelbar über eine Mehrfach-Steckkupplungseinrichtung mit äußeren elektrischen, pneumatischen und/oder hydraulischen Versorgungsleitungen verbunden oder verbindbar sind.

Weiterhin betrifft die Erfindung auch eine mit einer solchen Basiseinheit ausgestattete Schweißzange.

Derartige Schweißzangen werden in vielen Bereichen der Herstellungstechnik, insbesondere im Automobilbau, dazu verwendet, metallische Bauteile durch elektrisches Punktschweißen (Widerstandschweißen) zu verbinden. Dazu weist die Basiseinheit zangenartige Elektrodenarme auf, die an ihren freien Enden Schweißelektroden tragen, die für den jeweiligen Punktschweißvorgang unter Zwischenlage der zu verschweißenden Bauteile, insbesondere Metallbleche, zusammengeführt und mit einer Anpresskraft beaufschlagt werden. Hierbei wird ein elektrischer Schweißstrom über die Elektrodenarme und die Elektroden durch die Bauteile geführt, die dadurch erhitzt und stoffschlüssig verbunden werden. Häufig werden handgeführte Schweißzangen eingesetzt, die über einen Trägerkranz kardanisch im Raum aufgehängt werden, so dass sie bezüglich ihrer Raumorientierung nahezu beliebig beweglich sind.

Bei bekannten Schweißzangen werden alle notwendigen Versorgungsleitungen, und zwar elektrische Leitungen für den über die Elektrodenarme zu den Schweißelektroden zu führenden Schweißstrom sowie für bestimmte Steuerfunktionen, pneumatische (Schlauch-) Leitungen für Druckluft zum Elektrodenarm-Antrieb sowie zum Teil auch hydraulische (Schlauch-) Leitungen, insbesondere für Kühlwasser, durch eine Leitungsdurchführung und von dort weiter in das Gehäuse der Basiseinheit geführt und innerhalb des Gehäuses fest (unlösbar) mit den entsprechenden Funktionskomponenten verbunden. Im Bereich der Leitungsdurchführung ist zur Zugentlastung ein sogenannter Klemmstern angeordnet, bei dem es sich um einen scheibenförmigen Körper aus einem elastischen Material (Gummi, Elastomer) handelt. Jede Leitung ist durch eine Lochöffnung des Klemmsterns geführt, wobei der Klemmstern durch einen Klemmring so zusammengedrückt wird, dass die Leitungen klemmend, kraftschlüssig gehalten werden.

Es sind auch Schweißzangen bekannt, bei denen die Versorgungsleitungen über eine Mehrfach-Steckkupplungseinrichtung lösbar verbunden oder verbindbar sind. Dadurch ist ein einfacher Wechsel der Basiseinheit bzw. der Schweißzange möglich.

Der vorliegenden Erfindung liegt die Aufgabe zugrunde, den Anschluss der Versorgungsleitungen zu vereinfachen und die Leitungszuführung in das Gehäuse zu verbessern.

Erfindungsgemäß wird dies durch eine Basiseinheit mit den Merkmalen des Anspruchs 1 bzw. des Anspruchs 2 erreicht. Eine Schweißzange mit einer erfindungsgemäßen Basiseinheit ist Gegenstand des Anspruchs 14. Vorteilhafte Weiterbildungen der Erfindung sind Gegenstand der abhängigen Ansprüche.

Gemäß dem Anspruch 1 ist demnach die Leitungsdurchführung Bestandteil eines deckelartigen, eine Öffnung des Gehäuses verschließenden Wandungselementes. Das bedeutet, dass die Leitungsdurchführung in das Wandungselement integriert ist. Indem das Wandungselement die Öffnung des Gehäuses bevorzugt dicht verschließt, wird insgesamt eine abgedichtete Leitungsdurchführung erreicht. Hierbei kann die Leitungsdurchführung aus einem - an sich bekannten - gummielastischen Klemmstern bestehen, der eine Vielzahl von Leitungsöffnungen aufweist und mittels eines Klemmringes zur kraftschlüssigen Halterung der durchgeführten Verbindungsleitungen relativ zu dem Wandungselement elastisch zusammendrückbar ist.

In der Ausführungsvariante gemäß Anspruch 2 sind Steckverbinderteile der Steckkupplungseinrichtung ebenfalls an einem deckelartigen, eine Öffnung des Gehäuses verschließenden Wandungselement gehaltert. Auch bei dieser Alternative wird ein im Wesentlichen dichter Gehäuseverschluss mittels des Wandungselementes erreicht, indem auch die Steckverbinderteile dicht in Öffnungen des Wandungselementes eingesetzt sind. Der Anschluss der Versorgungsleitungen an die Basiseinheit ist sehr einfach, weil lediglich eine leitungsseitige, d. h. mit den externen Versorgungsleitungen verbundene Gegenkupplungseinheit mit den über das Wandungselement an dem Gehäuse der Basiseinheit gehalterten Steckverbinderteilen zusammengesteckt zu werden braucht. Dadurch kann auch die gesamte Basiseinheit bzw. die Schweißzange - beispielsweise zwecks Austausch, Wartung oder dergleichen - schnell und einfach von den Versorgungsleitungen getrennt werden. Um auch hierbei eine effektive Zugentlastung der Anschlüsse zu gewährleisten, sind einerseits die Versorgungsleitungen an einem Kupplungsträger der Gegenkupplungseinheit fixiert, und andererseits ist die Gegenkupplungseinheit bzw. deren Kupplungsträger über geeignete mechanische Verriegelungsmittel relativ zu der Basiseinheit bzw. zu deren Gehäuse festlegbar.

In einer besonders vorteilhaften Ausgestaltung ist die Basiseinheit bzw. die Schweißzange im Zuführbereich der Verbindungsleitungen modular aufgebaut, wobei das Wandungselement mit der Leitungsdurchführung ein Zugentlastungsmodul und/oder das Wandungselement mit den Steckverbinderteilen der Steckkupplungseinrichtung ein Steckanschlussmodul bilden. Die jeweiligen Wandungselemente sind derart an die Öffnung des Gehäuses angepasst, dass die Öffnung des Gehäuses wahlweise durch das Wandungselement des Zugentlastungsmoduls oder durch das Wandungselement des Steckanschlussmoduls verschließbar ist. Dadurch kann wahlweise das Zugentlastungsmodul oder das Steckanschlussmodul montiert werden. Diese Ausgestaltung führt zu einer vorteilhaften Herstellungsvariabilität, wobei auf einfache Weise - je nach Anwenderwunsch - unterschiedliche Ausführungen konzipiert werden können.

Anhand von in der Zeichnung veranschaulichten, bevorzugten Ausführungsbeispielen soll die Erfindung im Folgenden genauer beschrieben werden. Dabei zeigen:
- Fig. 1: eine perspektivische Seitenansicht einer ersten Ausführungsform einer erfindungsgemäßen Schweißzange schräg von vorne auf den Bereich von Elektrodenarmen, wobei diese Ausführung für einen lösbaren Steckanschluss von Versorgungsleitungen konzipiert ist,
- Fig. 2: die Schweißzange nach Fig. 1 aus einer anderen Blickrichtung schräg von hinten auf den Bereich einer bevorzugten Ausführung einer Mehrfach-Steckkupplungseinrichtung,
- Fig. 3: eine Stirnansicht in Pfeilrichtung III gemäß Fig. 2,
- Fig. 4: eine Teil-Seitenansicht im Bereich der Steckkupplungseinrichtung in Pfeilrichtung IV gemäß Fig. 3,
- Fig. 5: eine Teil-Draufsicht auf den Bereich gemäß Fig. 4 in Pfeilrichtung V gemäß Fig. 3,
- Fig.6: eine zweite, zum festen (unlösbaren) Anschluss von Versorgungsleitungen mit Zugentlastung konzipierte Ausführung einer erfindungsgemäßen Schweißzange in einer Ansicht analog zu Fig. 2,
- Fig. 7 bis 9: Ansichten zur Ausführung nach Fig. 6 analog zu den Fig. 3 bis 5.

In den verschiedenen Figuren der Zeichnung sind gleiche Teile stets mit den gleichen Bezugszeichen versehen und werden daher in der Regel auch jeweils nur einmal beschrieben.

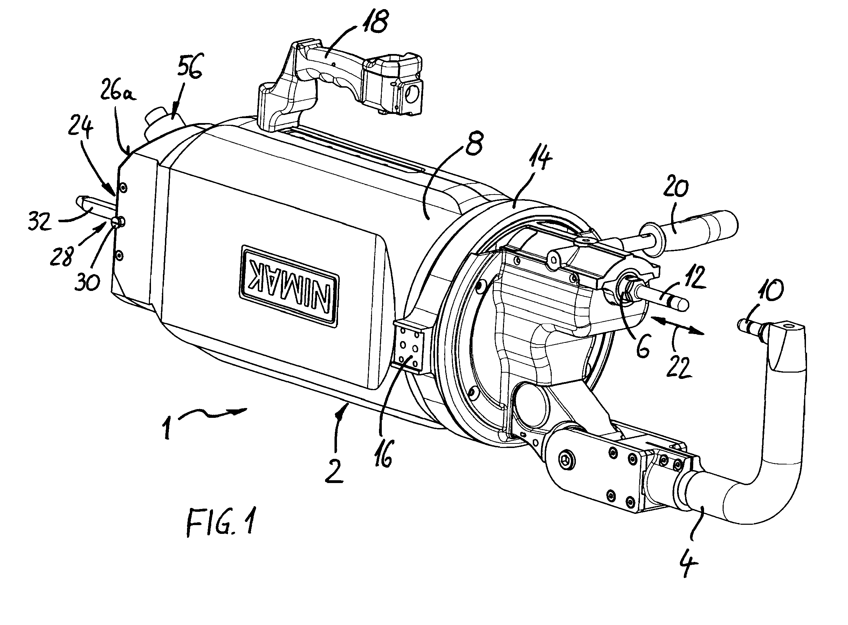

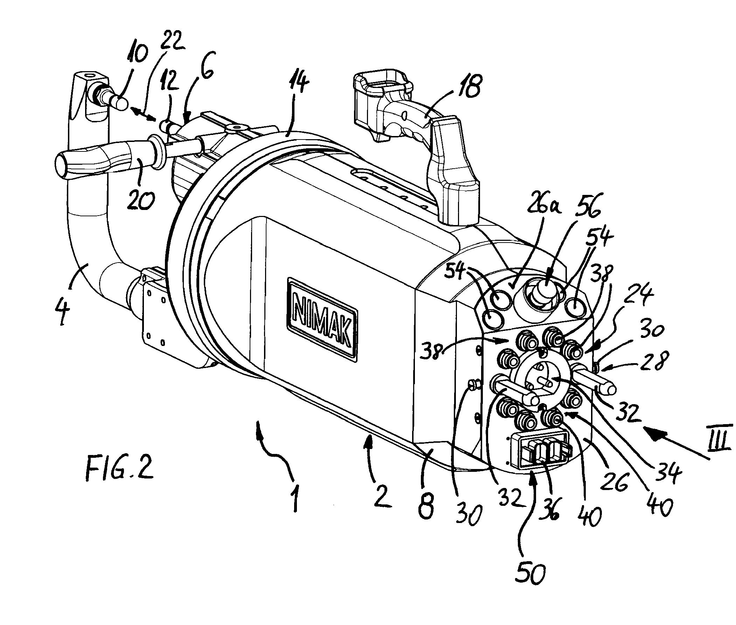

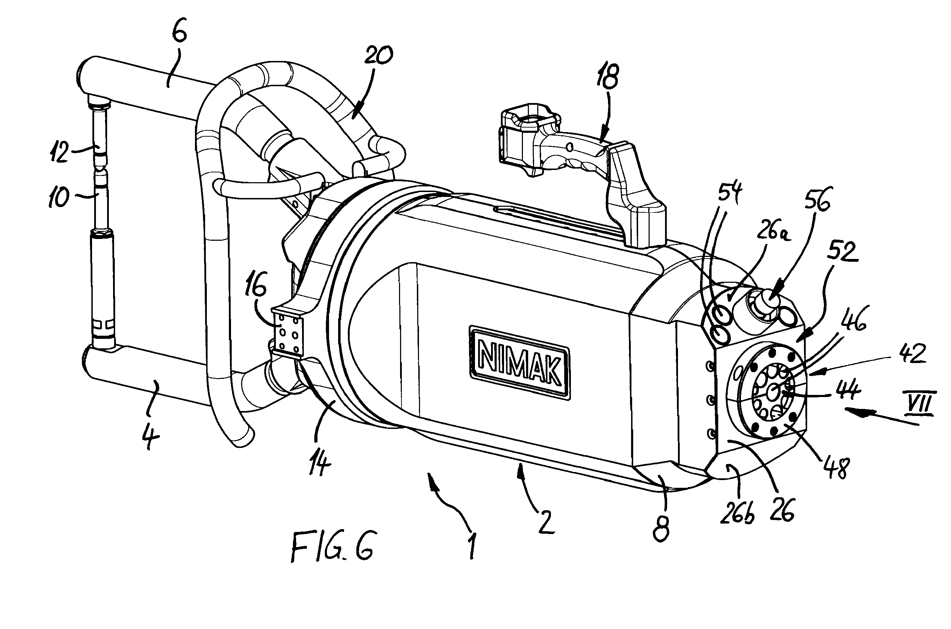

Zunächst ist in Fig. 1 und 2 sowie in Fig. 6 beispielhaft eine Schweißzange 1 in einer Ausführung als Handschweißzange, d. h. handgeführte Schweißzange insbesondere für den Automobilbau dargestellt. Die Schweißzange 1 besteht aus einer kompakten Basiseinheit 2 mit einer Elektrodenarm-Anordnung mit zwei Elektrodenarmen 4 und 6. Die Basiseinheit 2 enthält in einem Gehäuse 8 bestimmte, nicht genauer dargestellte Funktionskomponenten insbesondere zur Halterung der Elektrodenarme 4, 6, zum Antrieb zumindest eines der beiden Elektrodenarme 4, 6, zur Versorgung von Schweißelektroden 10, 12 der Elektrodenarme 4, 6 mit einem elektrischen Schweißstrom, sowie für bestimmte Steuerfunktionen.

Die gesamte Basiseinheit 2 einschließlich der Elektrodenarme 4, 6 ist über einen Trägerkranz 14 und über eine nicht dargestellte Aufhängung so in einem Raum aufhängbar, dass sie kardanisch beweglich ist. Der Trägerkranz 14 weist an einer Stelle seines Umfangs einen radial nach außen vorstehenden Verbindungsansatz 16 (Fig. 1 und 6) zum Befestigen an der Aufhängung auf. Zur Handhabung der Schweißzange 1 weist die Basiseinheit 2 in ihrem oberen Bereich einen z. B. pistolenartigen Handgriff 18 auf. Vorzugsweise ist noch ein zweiter Handgriff 20 in einem Übergangsbereich zu den Elektrodenarmen 4, 6 angeordnet. Mittels der Handgriffe 18, 20 läßt sich die kardanisch im Raum aufgehängte Schweißzange 1 gut manipulieren und beliebig ausrichten. Dadurch können die Elektrodenarme 4, 6 mit ihren Schweißelektroden 10, 12 optimal relativ zu den zu verschweißenden Bauteilen positioniert werden.

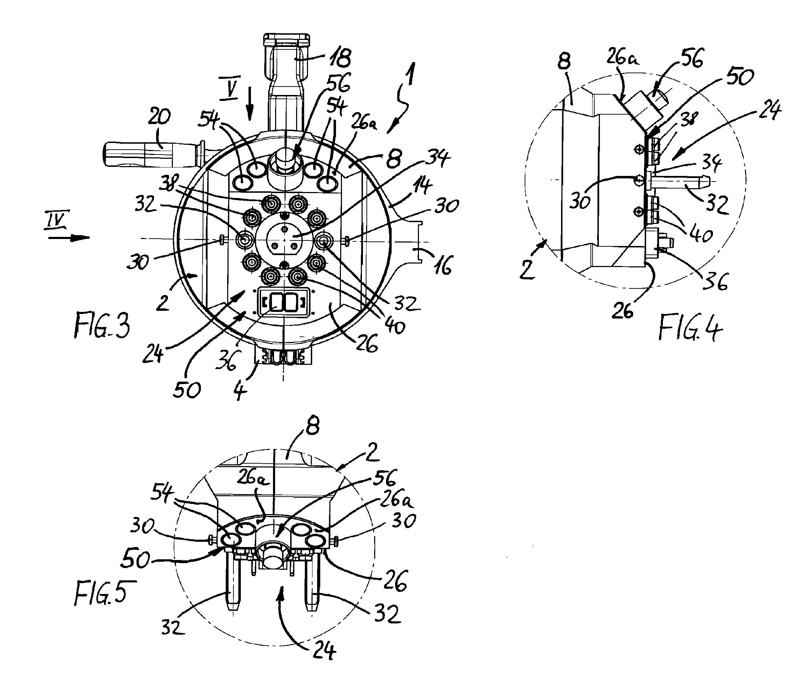

In der beispielhaft in Fig. 1 bis 5 dargestellten Ausführung ist die Schweißzange 1 als sogenannte C-Zange ausgeführt. Der eine Elektrodenarm 4 bildet zusammen mit der Basiseinheit 2 eine C-Form, und zwar als feststehender Fix-Arm. Der andere Elektrodenarm 6 ist als längsbeweglich in Doppelpfeilrichtung 22 gelagerter und insbesondere pneumatisch antreibbarer Move-Arm ausgebildet. Durch Bewegung des Elektrodenarms 6 in Schließrichtung können die Elektroden 10, 12 unter Zwischenlage von zu verschweißenden Bauteilen, insbesondere Metallblechen, mit einer Anpresskraft zusammengeführt werden. Es wird dann ein elektrischer Schweißstrom über die Elektrodenarme 4, 6 und die Elektroden 10, 12 durch die Bauteile geführt, die dadurch erhitzt und stoffschlüssig verbunden (verschweißt) werden. Bei dieser ersten Ausführung ist der zweite Handgriff 20 als seitlich bolzenartig vorstehender Griff ausgebildet.

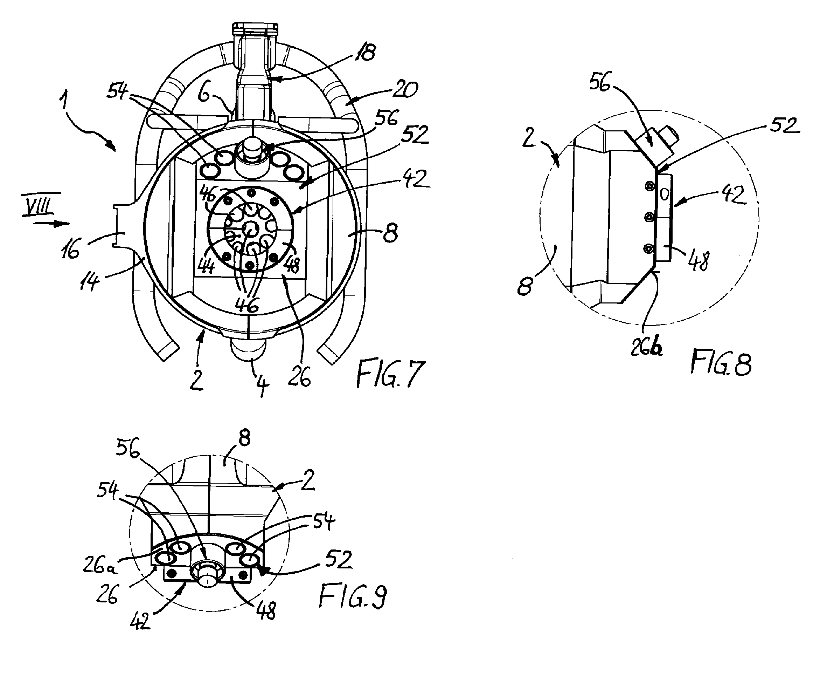

Gemäß Fig. 6 bis 9 kann es sich bei der Schweißzange 1 auch um eine sogenannte X-Zange handeln, bei der zumindest einer der Elektrodenarme 4, 6 relativ zu dem anderen Elektrodenarm schwenkbeweglich geführt und antreibbar ist, um die Schweißelektroden 10, 12 zusammen zu führen. Bei dieser zweiten Ausführung ist der zweite Handgriff 20 beispielhaft als relativ großer, den Anbindungsbereich der Elektrodenarme 4, 6 umfassender Bügelgriff ausgebildet.

Die innerhalb des Gehäuses 8 der Basiseinheit 2 angeordneten Funktionskomponenten sind je nach ihrer Funktion und Ausgestaltung mit nicht dargestellten äußeren elektrischen, pneumatischen und/oder hydraulischen Versorgungsleitungen verbunden oder verbindbar.

Das Gehäuse 8 weist - insbesondere auf seiner hinteren, den Elektrodenarmen 4, 6 gegenüberliegenden Stirnseite - eine nicht bezeichnete Öffnung auf, die durch ein Wandungselement 26 deckelartig und im Wesentlichen dicht verschließbar bzw. verschlossen ist.

In dem ersten, in Fig. 1 bis 5 dargestellten Ausführungsbeispiel sind in dem Wandungselement 26 diverse Steckverbinderteile einer Mehrfach-Steckkupplungseinrichtung 24 in einer bestimmten Anordnung gehaltert, so dass eine nicht dargestellte Gegenkupplungseinheit mit korrespondierenden Steckverbinderteilen aufgesteckt werden kann. Dabei weist die Gegenkupplungseinheit an einem gemeinsamen, beispielsweise plattenförmigen Kupplungsträger gehalterte Steckverbinderteile in einer entsprechenden Anordnung auf, und die Gegenkupplungseinheit bzw. der Kupplungsträger ist in der gekuppelten Stellung mechanisch relativ zu der Steckkupplungseinrichtung 24 festlegbar. Die äußeren, mit den Steckverbinderteilen der Gegenkupplungseinheit verbundenen Versorgungsleitungen sind relativ zu dem Kupplungsträger zugentlastend fixiert. Dadurch wird praktisch eine mittelbare Zugentlastung erreicht, indem die Steckkupplungseinrichtung 24 mechanische Verriegelungsmittel 28 zum lösbaren Fixieren der Gegenkupplungseinheit aufweist. Dadurch werden Zugkräfte, die über die Versorgungsleitungen wirken, von den Steckverbindungen ferngehalten und stattdessen über die Verriegelungsmittel 28 aufgenommen. Im dargestellten Beispiel bestehen die Verriegelungsmittel 28 aus seitlichen, quer zur Steck-Fügerichtung nach außen weisenden Riegelbolzen 30 sowie aus parallel zur Fügerichtung angeordneten Führungsbolzen 32.

Über die Führungsbolzen 32 wird die aufgesetzte Gegenkupplungseinheit geführt und so positioniert, dass alle Steckverbinderteile genau zusammen geführt werden. Die Gegenkupplungseinheit weist bestimmte Verriegelungsmittel zum Umgreifen der Riegelbolzen und gegebenenfalls zur formschlüssigen Verbindung mit den Führungsbolzen 32 auf.

Die genaue Anordnung der einzelnen Steckverbinderteile ist grundsätzlich beliebig. So kann ein elektrisches Steckverbinderteil 34 mit Kontaktelementen für den Schweißstrom etwa mittig angeordnet sein. Dieses Steckverbinderteil 34 ist z. B. nach Art eines üblichen Maschinensteckers (CEE-Anschluss) ausgebildet. Ein weiteres elektrisches Steckverbinderteil 36 kann beispielsweise im unteren Bereich der Stirnwandung 26 angeordnet sein. Dieses Steckverbinderteil 36 kann zum Steckverbinden von Steuerleitungen dienen. Weiterhin kann die Steckkupplungseinrichtung 24 pneumatische Steckverbinderteile 38 für Druckluftleitungen und/oder hydraulische Steckverbinderteile 40 für Hydraulikleitungen insbesondere zur Wasserversorgung (Kühlwasser) aufweisen. Die pneumatischen und hydraulischen Steckverbinderteile 38, 40 sind nach Art von üblichen Schnellverschlusskupplungen mit integrierten Schließventilen ausgeführt. Hierbei können diese Steckverbinderteile 38, 40, wie beispielhaft dargestellt ist, auf einem das elektrische Steckverbinderteil 34 für den Schweißstrom konzentrisch umschließenden Kreis angeordnet sein. Die im dargestellten Beispiel vorgesehenen zwei Führungsbolzen 32 liegen dabei ebenfalls etwa auf diesem Kreisbogen.

Durch die beschriebene, bevorzugte Ausgestaltung und Anordnung der Steckverbinderteile der Mehrfach-Steckkupplungseinrichtung 24 ist es möglich, eine große Anzahl von einzelnen Schnittstellen auf dem Wandungselement 26 unterzubringen.

Was nun die zweite Ausführung gemäß Fig. 6 bis 9 betrifft, so ist dabei das Wandungselement 26 - alternativ zu der Steckkupplungseinrichtung 24 - mit einer zugentlastenden Leitungsdurchführung 42 ausgestattet. Diese Leitungsdurchführung 42 besteht aus einem gummielastischen Klemmstern 44, bei dem es sich um ein scheibenförmiges Element aus einem elastischen Material handelt. Der Klemmstern 44 ist im Bereich einer entsprechend groß ausgelegten (in der Zeichnung nicht erkennbaren) Lochöffnung des Wandungselementes 26 gehaltert und weist eine Vielzahl von Leitungsöffnungen 46 auf. Wie dargestellt kann es sich um eine zentrische Leitungsöffnung 46 und mehrere auf einem konzentrischen Kreis verteilt angeordnete äußere Leitungsöffnungen 46 handeln. Dabei ist der Klemmstern 44 mittels eines Klemmringes 48 zur kraftschlüssigen, klemmenden Halterung von durchgeführten Verbindungsleitungen relativ zu dem Wandungselement 26 elastisch zusammendrückbar.

Bei der erfindungsgemäßen Schweißzange 1 bzw. Basiseinheit 2 handelt es sich bevorzugt im Anschluss- bzw. Zuführbereich der Versorgungsleitungen um einen modularen Aufbau. Einerseits bildet das Wandungselement 26 mit den Steckverbinderteilen 34 bis 40 der Steckkupplungseinrichtung 24 gemäß Fig. 1 bis 5 ein Steckanschlussmodul 50. Andererseits bildet bei der Ausführung gemäß Fig. 6 bis 9 das Wandungselement 26 mit der Leitungsdurchführung 42 ein Zugentlastungsmodul 52. Die bevorzugt hintere, stirnseitige Öffnung des Gehäuses 8 kann hierbei wahlweise durch Montage des Steckanschlussmoduls 50 gemäß Fig. 1 bis 5 oder durch Montage des Zugentlastungsmoduls 52 gemäß Fig. 6 bis 9 verschlossen werden.

In weiterer bevorzugter Ausgestaltung sind das jeweilige Wandungselement 26 und die stirnseitige Gehäuse-Öffnung in Anpassung aneinander derart geformt, dass das Wandungselement 26 - und dadurch das gesamte Modul 50 bzw. 52 - wahlweise in einer von mehreren, insbesondere zwei verschiedenen Ausrichtungen montierbar ist. In den dargestellten Beispielen kann jedes Modul 50, 52 in zwei um 180 ° gegeneinander gedrehten Stellungen montiert werden.

Im Zusammenhang damit kann das Wandungselement 26 mit Vorteil mindestens einen gegenüber einer stirnseitigen Hauptfläche fasenartig schräg abgewinkelten Flächenbereich 26a aufweisen, in dem beispielsweise bestimmte Schaltelemente 54 und/oder insbesondere ein elektrischer Not-Aus-Schalter 56 angeordnet sein können. Gemäß Fig. 6 bis 9 weist das Wandungselement 26 noch einen zweiten, gegenüberliegenden fasenartig schrägen Flächenbereich 26b auf.

Die Erfindung ist nicht auf die dargestellten Ausführungsbeispiele beschränkt, sondern umfasst auch alle im Sinne der Erfindung gleichwirkenden Ausführungen und Anordnungen.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Basiseinheit (2) für eine Schweißzange (1) zum Elektro-Punktschweißen, mit einem bestimmte Funktionskomponenten enthaltenden Gehäuse (8), wobei die Funktionskomponenten mit äußeren elektrischen, pneumatischen und/oder hydraulischen Versorgungsleitungen verbunden bzw. verbindbar sind, und wobei eine zugentlastende Leitungsdurchführung (42) für die Versorgungsleitungen vorgesehen ist,
**dadurch gekennzeichnet, dass** die Leitungsdurchführung (42) Bestandteil eines deckelartigen, eine Öffnung des Gehäuses (8) verschließenden Wandungselementes (26) ist.

2. Basiseinheit (2) für eine Schweißzange (1) zum Elektro-Punktschweißen, mit einem bestimmte Funktionskomponenten enthaltenden Gehäuse (8), wobei die Funktionskomponenten mittelbar über eine Mehrfach-Steckkupplungseinrichtung (24) mit äußeren elektrischen, pneumatischen und/oder hydraulischen Versorgungsleitungen verbunden oder verbindbar sind,
**dadurch gekennzeichnet, dass** Steckverbinderteile(34bis40) der Steckkupplungseinrichtung (24) an einem deckelartigen, eine Öffnung des Gehäuses (8) verschließenden Wandungselement (26) gehaltert sind.

3. Basiseinheit (2) nach Anspruch 1 oder 2,
**gekennzeichnet durch** einen modularen Aufbau, wobei das Wandungselement (26) mit der Leitungsdurchführung (42) ein Zugentlastungsmodul (52) und/oder das Wandungselement (26) mit den Steckverbinderteilen (34 bis 40) der Steckkupplungseinrichtung (24) ein Steckanschlussmodul (50) bilden, und wobei die Öffnung des Gehäuses (8) wahlweise **durch** das Wandungselement (26) des Zugentlastungsmoduls (52) oder **durch** das Wandungselement (26) des Steckanschlussmoduls (50) verschlossen bzw. verschließbar ist.

4. Basiseinheit nach Anspruch 2 oder 3,
**dadurch gekennzeichnet, dass** die Steckkupplungseinrichtung (24) elektrische Steckverbinderteile (34, 36) für Schweißstrom-Leitungen und für Steuerleitungen aufweist.

5. Basiseinheit nach einem der Ansprüche 2 bis 4,
**dadurch gekennzeichnet, dass** die Steckkupplungseinrichtung (24) pneumatische Steckverbinderteile (38) für Druckluftleitungen aufweist.

6. Basisteil nach einem der Ansprüche 2 bis 5,
**dadurch gekennzeichnet, dass** die Steckkupplungseinrichtung (24) hydraulische Steckverbinderteile (40) für Hydraulikleitungen aufweist.

7. Basiseinheit nach einem der Ansprüche 2 bis 6,
**dadurch gekennzeichnet, dass** die Steckkupplungseinrichtung (24) mit einer korrespondierenden Gegenkupplungseinheit steckverbindbar ist, wobei die Gegenkupplungseinheit an einem gemeinsamen Kupplungsträger gehalterte, korrespondierende Steckverbinderteile aufweist und in der gekuppelten Stellung mechanisch relativ zu der Steckkupplungseinrichtung (24) festlegbar ist.

8. Basiseinheit nach Anspruch 7,
**dadurch gekennzeichnet, dass** die äußeren, mit den Steckverbinderteilen der Gegenkupplungseinheit verbundenen Versorgungsleitungen relativ zu dem Kupplungsträger zugentlastend fixiert sind.

9. Basiseinheit nach einem der Ansprüche 2 bis 8,
**dadurch gekennzeichnet, dass** die Steckkupplungseinrichtung (24) Verriegelungsmittel (28) zum lösbaren Fixieren der Gegenkupplungseinheit aufweist.

10. Basiseinheit nach einem der Ansprüche 1 bis 9,
**dadurch gekennzeichnet, dass** die Leitungsdurchführung (42) aus einem gummielastischen Klemmstern (44) besteht, der eine Vielzahl von Leitungsöffnungen (46) aufweist und mittels eines Klemmrings (48) zur kraftschlüssigen Halterung von durchgeführten Leitungen relativ zu dem Wandungselement (26) elastisch zusammendrückbar ist.

11. Basiseinheit nach einem der Ansprüche 1 bis 10,
**dadurch gekennzeichnet, dass** das Gehäuse (8) auf einer Seite mit Elektrodenarmen (4, 6) verbunden ist, wobei die von dem Wandungselement (26) insbesondere im Wesentlichen dicht verschlossene Gehäuse-Öffnung bevorzugt im Bereich einer den Elektrodenarmen (4, 6) gegenüberliegenden, hinteren Gehäuse-Stirnseite angeordnet ist.

12. Basiseinheit nach einem der Ansprüche 1 bis 11,
**dadurch gekennzeichnet, dass** das jeweilige Wandungselement (26) und die Gehäuse-Öffnung derart geformt sind, dass das Wandungselement (26) wahlweise in einer von mehreren verschiedenen Ausrichtungen montierbar ist.

13. Basiseinheit nach einem der Ansprüche 1 bis 12,
**dadurch gekennzeichnet, dass** das Wandungselement (26) einen gegenüber einer Hauptfläche schräg abgewinkelten Flächenbereich (26a) aufweist, in dem Schaltelemente (54), insbesondere ein elektrischer Not-Aus-Schalter (56), angeordnet sind.

14. Schweißzange (1) zum Elektro-Punktschweißen,
**gekennzeichnet durch** eine Basiseinheit (2) nach einem der Ansprüche 1 bis 13.

15. Schweißzange nach Anspruch 14,
**dadurch gekennzeichnet, dass** die Basiseinheit (2) mit Elektrodenarmen (4, 6) verbunden ist.

16. Wandungselement (26) mit einer zugentlastenden Leitungsdurchführung (42) für eine Basiseinheit (2) nach einem der Ansprüche 1 bis 13 bzw. für eine Schweißzange (1) nach Anspruch 14 oder 15.

17. Wandungselement (26) mit Steckverbinderteilen (34 bis 40) einer Mehrfach-Steckkupplungseinrichtung (24) für eine Basiseinheit (2) nach einem der Ansprüche 2 bis 13 bzw. für eine Schweißzange (1) nach Anspruch 14 oder 15.
